(19) **Europäisches Patentamt / European Patent Office / Office européen des brevets**

(11) **EP 4 443 989 A1**

(12) # EUROPEAN PATENT APPLICATION

(43) Date of publication:
**09.10.2024 Bulletin 2024/41**

(21) Application number: **24168168.3**

(22) Date of filing: **03.04.2024**

(51) International Patent Classification (IPC):
**H04W 52/14** (2009.01)    **H04L 25/03** (2006.01)

(52) Cooperative Patent Classification (CPC):
**H04W 52/146; H04L 25/03828; H04W 52/262**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 GB 202305134**

(71) Applicant: **Nokia Technologies Oy**
**02610 Espoo (FI)**

(72) Inventors:
• **HOOLI, Kari Juhani**
  **Oulu (FI)**

• **LEHTI, Arto Antony (FR)**
• **TERVO, Oskari Oulu (FI)**
• **TIIROLA, Esa Tapani Oulu (FI)**
• **NHAN, Nhat-Quang Reims (FR)**
• **MASO, Marco Issy les Moulineaux (FR)**

(74) Representative: **Bryers Intellectual Property Ltd**
**Bristol & Bath Science Park**
**Dirac Crescent, Emerson's Green**
**Bristol, BS16 7FR (GB)**

(54)    **APPARATUS, METHOD, AND COMPUTER PROGRAM**

(57)    There is provided an apparatus, computer program and method for causing a user equipment to perform: receiving, from an access network node, a grant of uplink resources for making an uplink transmission within a frequency band for data transmission; determining whether the apparatus is configured to obtain a signal for the uplink transmission by applying a frequency-domain spectrum shaping with spectrum extension operation to a baseband signal; and selecting an uplink power to be used for transmitting the uplink transmission in dependence on said whether the apparatus is configured to apply the frequency-domain spectrum shaping with spectrum extension operation.

**Fig.7**

EP 4 443 989 A1

**Description**

*Field of the disclosure*

The examples described herein generally relate to apparatus, methods, and computer programs.

*Background*

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

*Summary*

According to a first aspect, there is provided an apparatus for a user equipment, the apparatus comprising means for performing: receiving, from an access network node, a grant of uplink resources for making an uplink transmission within a frequency band for data transmission; determining whether the apparatus is configured to obtain a signal for the uplink transmission by applying a frequency-domain spectrum shaping with spectrum extension operation to a baseband signal; and selecting an uplink power to be used for transmitting the uplink transmission in dependence on said whether the apparatus is configured to apply the frequency-domain spectrum shaping with spectrum extension operation.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor. When the apparatus is configured to apply the frequency-domain spectrum shaping with spectrum extension operation, the apparatus may comprise means for: determining a total bandwidth of the grant of uplink resources; and determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining whether the apparatus is configured to apply a frequency-domain spectrum shaping with spectrum extension operation may comprise: determining a power offset value that comprises a network reception power offset value for compensating for receiver losses for the uplink transmission when the frequency-domain spectrum shaping with spectrum extension operation is applied.

The determining the power offset value may comprise receiving the network reception power offset value from the access network node.

The determining the power offset value may comprise determining a user equipment power offset value for compensating for deviations in a transmission shaping filter used by the user equipment for uplink transmissions relative to a predetermined reference transmission shaping filter.

The determining the user equipment power offset value may comprise determining:

$$10log_{10}\left(P_{RE,b,f,c}^{Nominal}\big/P_{RE,b,f,c}^{Used}\right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

The determining the power offset value may comprise: identifying a set of power offset values, each power offset value in the set being associated with a respective uplink transmission configuration; and selecting a power offset value from the set of power offset values in dependence on an uplink transmission configuration to be used by the user equipment for the received grant.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

The apparatus may comprise means for: determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission; wherein said selecting the uplink power may be performed in dependence on the determined modulation and coding scheme offset value.

The modulation and coding scheme offset value may be proportional to:

$$10log_{10}\left(\left(2^{\text{BPRE}\cdot 1.25} - 1\right)\right)$$

Wherein the Bits Per Resource Element (BPRE) is given by:

$$\text{BPRE} = \sum_{r=0}^{C-1} K_r / N_{RE}$$

Where C is a number of transmitted code blocks, $K_r$ is a size for code block $r$, and $N_{RE}$ is a number of resource elements, wherein $N_{RE}$ comprises at least one of: a number of uplink resource elements and/or subcarriers in the uplink grant that the user equipment assumes to be utilized by an intended receiver of the uplink transmission; a total number of uplink resource elements and/or subcarriers in the uplink grant; or a fraction of the total number of uplink resource elements and/or subcarriers in the uplink grant.

According to a second aspect, there is provided a method for an apparatus for a user equipment, the method comprising: receiving, from an access network node, a grant of uplink resources for making an uplink transmission within a frequency band for data transmission; determining whether the apparatus is configured to obtain a signal for the uplink transmission by applying a frequency-domain spectrum shaping with spectrum extension operation to a baseband signal; and selecting an uplink power to be used for transmitting the uplink transmission in dependence on said whether the apparatus is configured to apply the frequency-domain spectrum shaping with spectrum extension operation.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor. When the apparatus is configured to apply the frequency-domain spectrum shaping with spectrum extension operation, the method may comprise: determining a total bandwidth of the grant of uplink resources; and determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining whether the apparatus is configured to apply a frequency-domain spectrum shaping with spectrum extension operation may comprise: determining a power offset value that comprises a network reception power offset value for compensating for receiver losses for the uplink transmission when the frequency-domain spectrum shaping with spectrum extension operation is applied.

The determining the power offset value may comprise receiving the network reception power offset value from the access network node.

The determining the power offset value may comprise determining a user equipment power offset value for compensating for deviations in a transmission shaping filter used by the user equipment for uplink transmissions relative to a predetermined reference transmission shaping filter.

The determining the user equipment power offset value may comprise determining:

$$10 log_{10} \left( P_{RE,b,f,c}^{Nominal} / P_{RE,b,f,c}^{Used} \right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

The determining the power offset value may comprise: identifying a set of power offset values, each power offset value in the set being associated with a respective uplink transmission configuration; and selecting a power offset value from the set of power offset values in dependence on an uplink transmission configuration to be used by the user equipment for the received grant.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

The method may comprise: determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission; wherein said selecting the uplink power may be performed in dependence on the determined modulation and coding scheme offset value.

The modulation and coding scheme offset value may be proportional to:

$$10 log_{10} \left( \left( 2^{BPRE \cdot 1.25} - 1 \right) \right)$$

Wherein the Bits Per Resource Element (BPRE) is given by:

$$BPRE = \sum_{r=0}^{C-1} K_r / N_{RE}$$

Where $C$ is a number of transmitted code blocks, $K_r$ is a size for code block $r$, and $N_{RE}$ is a number of resource elements, wherein $N_{RE}$ comprises at least one of: a number of uplink resource elements and/or subcarriers in the uplink grant that the user equipment assumes to be utilized by an intended receiver of the uplink transmission; a total number of uplink resource elements and/or subcarriers in the uplink grant; or a fraction of the total number of uplink resource elements and/or subcarriers in the uplink grant.

According to a third aspect, there is provided an apparatus for a user equipment, the apparatus comprising: at least one processor; and at least one memory comprising code that, when executed by the at least one processor, causes the apparatus to perform: receiving, from an access network node, a grant of uplink resources for making an uplink transmission within a frequency band for data transmission; determining whether the apparatus is configured to obtain a signal for the uplink transmission by applying a frequency-domain spectrum shaping with spectrum extension operation to a baseband signal; and selecting an uplink power to be used for transmitting the uplink transmission in dependence on said whether the apparatus is configured to apply the frequency-domain spectrum shaping with spectrum extension operation.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor. When the apparatus is configured to apply the frequency-domain spectrum shaping with spectrum extension operation, the apparatus may be caused to perform: determining a total bandwidth of the grant of uplink resources; and determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining whether the apparatus is configured to apply a frequency-domain spectrum shaping with spectrum extension operation may comprise: determining a power offset value that comprises a network reception power offset value for compensating for receiver losses for the uplink transmission when the frequency-domain spectrum shaping with spectrum extension operation is applied.

The determining the power offset value may comprise receiving the network reception power offset value from the access network node.

The determining the power offset value may comprise determining a user equipment power offset value for compensating for deviations in a transmission shaping filter used by the user equipment for uplink transmissions relative to a predetermined reference transmission shaping filter.

The determining the user equipment power offset value may comprise determining:

$$10log_{10} \left( P_{RE,b,f,c}^{Nominal} / P_{RE,b,f,c}^{Used} \right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

The determining the power offset value may comprise: identifying a set of power offset values, each power offset value in the set being associated with a respective uplink transmission configuration; and selecting a power offset value from the set of power offset values in dependence on an uplink transmission configuration to be used by the user equipment for the received grant.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

The apparatus may be caused to perform: determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission; wherein said selecting the uplink power may be performed in dependence on the determined modulation and coding scheme offset value.

The modulation and coding scheme offset value may be proportional to:

$$10log_{10}\left( \left( 2^{BPRE \cdot 1.25} - 1 \right) \right)$$

Wherein the Bits Per Resource Element (BPRE) is given by:

$$BPRE = \sum_{r=0}^{C-1} K_r / N_{RE}$$

Where $C$ is a number of transmitted code blocks, $K_r$ is a size for code block $r$, and $N_{RE}$ is a number of resource elements, wherein $N_{RE}$ comprises at least one of: a number of uplink resource elements and/or subcarriers in the uplink grant that the user equipment assumes to be utilized by an intended receiver of the uplink transmission; a total number of uplink resource elements and/or subcarriers in the uplink grant; or a fraction of the total number of uplink resource elements and/or subcarriers in the uplink grant.

According to a fourth aspect, there is provided an apparatus for a user equipment, the apparatus comprising: receiving circuitry for receiving, from an access network node, a grant of uplink resources for making an uplink transmission within a frequency band for data transmission; determining circuitry for determining whether the apparatus is configured to obtain a signal for the uplink transmission by applying a frequency-domain spectrum shaping with spectrum extension operation to a baseband signal; and selecting circuitry for selecting an uplink power to be used for transmitting the uplink transmission in dependence on said whether the apparatus is configured to apply the frequency-domain spectrum shaping with spectrum extension operation.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor. When the apparatus is configured to apply the frequency-domain spectrum shaping with spectrum extension operation, the apparatus may comprise: determining circuitry for determining a total bandwidth of the grant of uplink resources; and determining circuitry for determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining circuitry for determining whether the apparatus is configured to apply a frequency-domain spectrum shaping with spectrum extension operation may comprise: determining circuitry for determining a power offset value that comprises a network reception power offset value for compensating for receiver losses for the uplink transmission when the frequency-domain spectrum shaping with spectrum extension operation is applied.

The determining circuitry for determining the power offset value may comprise receiving circuitry for receiving the network reception power offset value from the access network node.

The determining circuitry for determining the power offset value may comprise determining circuitry for determining a user equipment power offset value for compensating for deviations in a transmission shaping filter used by the user equipment for uplink transmissions relative to a predetermined reference transmission shaping filter.

The determining circuitry for determining the user equipment power offset value may comprise determining circuitry for determining:

$$10log_{10}\left(P_{RE,b,f,c}^{Nominal}/P_{RE,b,f,c}^{Used}\right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

The determining circuitry for determining the power offset value may comprise: identifying circuitry for identifying a set of power offset values, each power offset value in the set being associated with a respective uplink transmission configuration; and selecting circuitry for selecting a power offset value from the set of power offset values in dependence on an uplink transmission configuration to be used by the user equipment for the received grant.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

The apparatus may comprise: determining circuitry for determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission; wherein said selecting the uplink power may be performed in dependence on the determined modulation and coding scheme offset value.

The modulation and coding scheme offset value may be proportional to:

$$10log_{10}\left(\left(2^{\text{BPRE}\cdot1.25}-1\right)\right)$$

Wherein the Bits Per Resource Element (BPRE) is given by:

$$\text{BPRE} = \sum_{r=0}^{C-1} K_r / N_{RE}$$

Where $C$ is a number of transmitted code blocks, $K_r$ is a size for code block $r$, and $N_{RE}$ is a number of resource elements, wherein $N_{RE}$ comprises at least one of: a number of uplink resource elements and/or subcarriers in the uplink grant that the user equipment assumes to be utilized by an intended receiver of the uplink transmission; a total number of uplink resource elements and/or subcarriers in the uplink grant; or a fraction of the total number of uplink resource elements and/or subcarriers in the uplink grant.

According to a fifth aspect, there is provided non-transitory computer readable medium comprising program instructions for causing an apparatus for a user equipment to perform: receiving, from an access network node, a grant of uplink resources for making an uplink transmission within a frequency band for data transmission; determining whether the apparatus is configured to obtain a signal for the uplink transmission by applying a frequency-domain spectrum shaping with spectrum extension operation to a baseband signal; and selecting an uplink power to be used for transmitting the uplink transmission in dependence on said whether the apparatus is configured to apply the frequency-domain spectrum shaping with spectrum extension operation.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor. When the apparatus is configured to apply the frequency-domain spectrum shaping with spectrum extension operation, the apparatus may be caused to perform: determining a total bandwidth of the grant of uplink resources; and determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining whether the apparatus is configured to apply a frequency-domain spectrum shaping with spectrum extension operation may comprise: determining a power offset value that comprises a network reception power offset value for compensating for receiver losses for the uplink transmission when the frequency-domain spectrum shaping with spectrum extension operation is applied.

The determining the power offset value may comprise receiving the network reception power offset value from the access network node.

The determining the power offset value may comprise determining a user equipment power offset value for compensating for deviations in a transmission shaping filter used by the user equipment for uplink transmissions relative to a predetermined reference transmission shaping filter.

The determining the user equipment power offset value may comprise determining:

$$10log_{10}\left(P_{RE,b,f,c}^{Nominal} / P_{RE,b,f,c}^{Used}\right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

The determining the power offset value may comprise: identifying a set of power offset values, each power offset value in the set being associated with a respective uplink transmission configuration; and selecting a power offset value from the set of power offset values in dependence on an uplink transmission configuration to be used by the user equipment for the received grant.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

The apparatus may be caused to perform: determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission; wherein said selecting the uplink power may be performed in dependence on the determined modulation and coding scheme offset value.

The modulation and coding scheme offset value may be proportional to:

$$10log_{10}\left(\left(2^{\text{BPRE}\cdot1.25} - 1\right)\right)$$

Wherein the Bits Per Resource Element (BPRE) is given by:

$$\text{BPRE} = \sum_{r=0}^{C-1} K_r / N_{RE}$$

Where $C$ is a number of transmitted code blocks, $K_r$ is a size for code block $r$, and $N_{RE}$ is a number of resource elements, wherein $N_{RE}$ comprises at least one of: a number of uplink resource elements and/or subcarriers in the uplink grant that the user equipment assumes to be utilized by an intended receiver of the uplink transmission; a total number of uplink resource elements and/or subcarriers in the uplink grant; or a fraction of the total number of uplink resource elements and/or subcarriers in the uplink grant.

According to a sixth aspect, there is provided a computer program product stored on a medium that may cause an apparatus to perform any method as described herein.

According to a seventh aspect, there is provided an electronic device that may comprise apparatus as described herein.

According to an eighth aspect, there is provided a chipset that may comprise an apparatus as described herein.

*Brief description of Figures*

Some examples, will now be described, merely by way of illustration only, with reference to the accompanying drawings in which:

Figures 1 shows a schematic representation of a 5G system;
Figure 2 shows a schematic representation of a network apparatus;
Figure 3 shows a schematic representation of a user equipment;
Figure 4 illustrates example operations for a spectrum extension operation;
Figure 5 illustrates example properties of differing filter designs; and
Figures 6 and 7 illustrate operations described herein.

*Detailed description*

The following describes operations that may be performed by apparatus for selecting an uplink transmission power. In particular, the following introduces a new factor for increasing or decreasing the uplink transmission power used by the user equipment in dependence on properties of a receiving network apparatus (e.g., a gNB) and/or properties of how the user equipment spectrally extends an uplink signal.

In the following description of examples, certain aspects are explained with reference to devices that are often capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

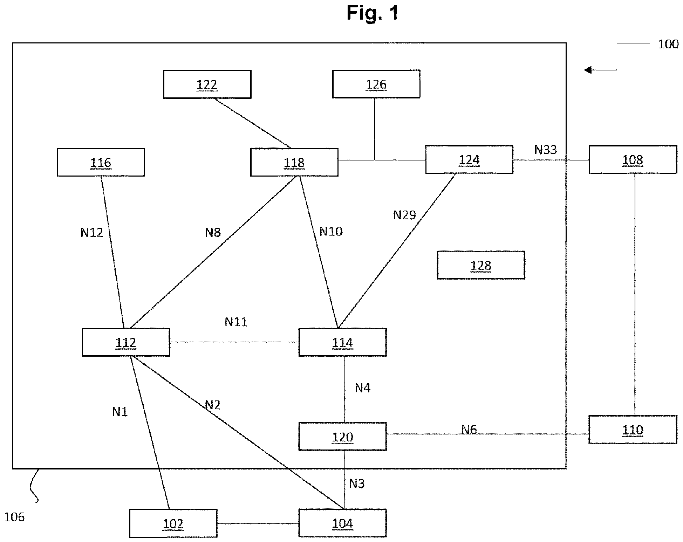

Before describing in detail the examples, certain general principles of a 5G wireless communication system are briefly explained with reference to Figures 1 to 3.

Figure 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

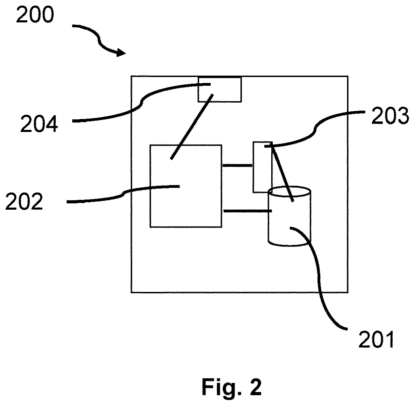

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions. References to "code" herein are understood to refer to software code, and vice versa.

**The** station of the access system may be categorised into two different types: distributed units (DUs), and centralised units (Cus).

A DU provides access node support for lower layers of the protocol stack (such as, for example, the radio link control (RLC), medium access control (MAC), and/or physical layer protocol layers). Each DU is able to support one or more cells, while each cell is able to support one or more beams.

A CU can support multiple Dus, and provides access node support for higher layers of the protocol stack within an access node (such as, for example, packet data convergence protocol (PDCP), service data adaptation protocol (SDAP), and/or radio resource control (RRC) protocol layers). The interface between a CU and a DU is labelled as an F1 interface. There is a single CU for each gNB, and CU's belonging to multiple gNB may be implemented using a shared hardware platform.

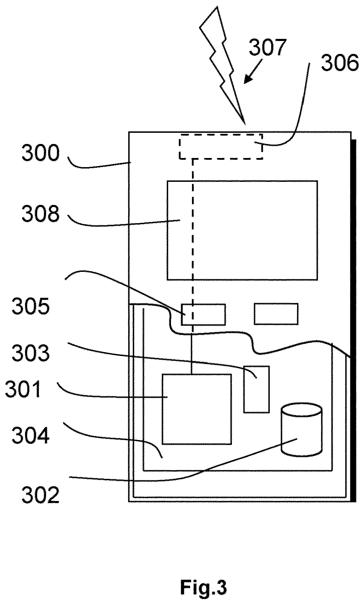

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software code and hardware aided execution of Tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

In 5G NR, two waveforms have been specified. These waveforms include:

- Cyclic prefix orthogonal frequency division multiplexing (CP-OFDM), which is usable for both uplink and downlink transmissions, and
- Discrete Fourier transform spread orthogonal frequency division multiplexing (DFT-s-OFDM), which is usable for only uplink transmissions.

For CP-OFDM, a signal is first mapped to a plurality of subcarriers, before being input to an inverse fast fourier transform (IFFT) entity. The IFFT entity outputs to a cyclic prefix insertion entity.

DFT-s-OFDM comprises frequency domain generation for a single carrier waveform. DFT-s-OFDM involves similar mechanisms to CP-OFDM, except prior to sub-carrier mapping, the signal is first input to a transform precoding entity, which has a function for spreading uplink data in a predetermined way that reduces the Peak-to-Average power (PAPR) of the resulting transmitted waveform. The transform precoding may be considered as a form of DFT as it creates a frequency domain representation of the original input signal. In other words, the transform precoding block may be considered to be a Fourier transform block that converts a time domain signal into frequency domain signal.

3GPP has issued a number of releases (Rel) for defining operating communication protocols related to a communications network. Currently, objectives and work are being set in relation to Release 18 (Rel-18).

As good coverage is important for cellular networks, different types of coverage enhancements are currently being considered Rel-18. The following considers coverage enhancements in relation to DFT-s-OFDM signals, which are prone to high amplitude fluctuations due to nonlinear devices (e.g., power amplifiers) in the transmission path. Compared to OFDM signals, DFT-s-OFDM signals have a lower Peak-to-Average power.

In particular, the following considers coverage enhancements that enable a UE to transmit using higher transmission powers by reducing a signal's amplitude fluctuations, which may be reflected by a lower peak-to-average power ratio (PAPR). PAPR is a metric than indicates an amplitude fluctuation of a DFT-s-OFDM signal.

In more detail, spectrum extension (SE) for frequency domain spectrum shaping (FDSS) are considered. A spectrum extension mechanism for FDSS may be considered to comprise a mechanism that increases a time separation between neighbouring pulses shaped according to this mechanism (e.g., as the pulse/signal decays faster). Spectrum extension mechanisms (which may also be said to result in spectral shaping) are discussed further below.

To form a signal to be transmitted over the air, modulated symbols and/or reference signals are converted to a waveform that acts as a baseband signal. The baseband signal is mixed to a radio frequency (RF) before being transmitted to a network access node over an air-interface.

The transmission rank indicates how many independent data streams (layers) can be transmitted independently. DFT-s-OFDM defined for NR only supports a single transmission layer (transmission rank = 1) per user, whereas CP-OFDM can support more than one transmission layer (transmission rank $\geq$ 1). This means that using CP-OFDM can provide a higher throughput and capacity than use of DFT-s-OFDM. However, as using DFT-s-OFDM may result in a lower peak-to-average power ratio (PAPR) than CP-OFDM, DFT-s-OFDM waveforms may be transmitted using a higher transmit power than CP-OFDM waveforms, which can result in better coverage compared to using CP-OFDM.

Although DFT-s-OFDM may already offer a lower PAPR compared to its CP-OFDM counterpart, 5G NR Release 15 (Rel-15) also introduced a frequency domain spectrum shaping function, which was used to further reduce the PAPR and/or lower Cubic Metric (CM). The cubic metric is a metric for amplitude fluctuation of a signal that is more closely related to distortions introduced by nonlinear devices than PAPR is.

In Rel-15, Frequency Domain Spectrum Shaping (FDSS) may be applied for DFT-s-OFDM without spectrum extension. This Rel-15 FDSS mechanism without spectrum extension is only used with pi/2- Binary Phase Shift Keying (BPSK) modulation.

In a Rel-17 study item for coverage enhancement, it was noted that the gain achieved by applying FDSS (without extension) to higher order modulation techniques (e.g., Quadrature Phase Shift Keying (QPSK) modulation) is lower than the gain that may be achieved when applying FDSS to pi/2-BPSK.

Spectrum (or spectral) shaping relates to processing a signal to modify the amplitude in the frequency domain to match a predetermined spectra. The spectrum shaping function aims to obtain spectra having a lower Maximum Power Reduction (MPR) than the signal input to the spectrum shaping function, and hence higher maximum transmission power for coverage enhancement. MPR specifies an allowed reduction of maximum power level for certain combinations of modulation used and the number of resource blocks that are assigned in order to pass, for example, transmitter adjacent channel leakage ratio requirements.

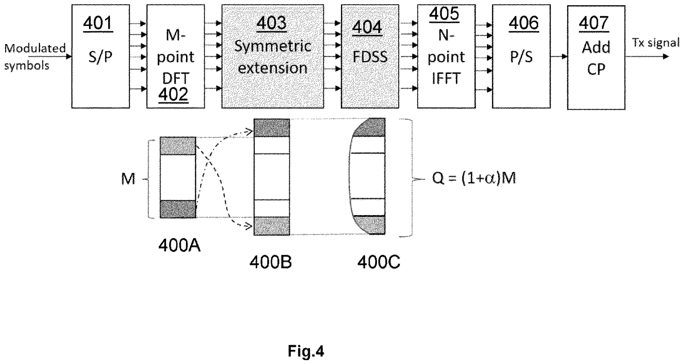

The spectrum shaping function can be applied with or without spectral extension. Spectral extension relates to spectrally extend a signal to provide a larger time separation of neighbouring pulses than is achieved without spectral extension operations, and may be achieved by any of a plurality of different spectral extension mechanisms. For example, a symmetric extension mechanism may be used as a spectrum extension mechanism. A symmetric extension mechanism copies, for both sides of a signal output from a DFT function (a.k.a., a DFT output signal) that is input into the symmetric extension mechanism, subcarriers from one side of the DFT output to the other side. As another example, a cyclic extension mechanism may be used as a spectrum extension mechanism. In both of these examples, a central "inband" part of the DFT output signal may remain unchanged by the extension operation (e.g., a central part of a signal input is the same as the central part of the signal output), and the spectrum extension operation may simply add and shape an "excess band" part on both ends of the inband part (e.g., the spectrum extension operation may sandwich the inband part between two parts of an excess band created by the spectrum extension operation). The central inband part of the signal output from the spectrum extension mechanism may be, or otherwise correspond to, the whole DFT output signal (e.g., the output of 402 in Figure 4, below).

For brevity, some examples below may refer to a specific type of spectrum extension mechanism. However, it is understood that other spectrum extension mechanisms may be used in those examples without the other operations changing. FDSS with spectrum extension may alternatively be considered as the application of a cyclic extension and transmission shaping filtering operation, and/or the application of a symmetric extension and transmission shaping filtering operation, depending on the spectrum extension mechanism employed (other spectrum extension mechanisms are also possible).

The use of a spectrum extension mechanism may provide several advantages.

For example, the use of the spectrum extension mechanism can reduce the PAPR since the effective pulses have larger time separation. Furthermore, the use of the spectrum extension mechanism may reduce emissions (both inband emissions and out-of-band emissions)

**As** another example, the use of the spectrum extension mechanism can reduce the inter-symbol interference, which is added when FDSS is introduced.

Finally, since the excess band introduced may also comprise data, it may or may not be used by an access network node (e.g., gNB) receiver (e.g., for reception, summing the excess band with the inband). When the excess band is used, the excess band may therefore provide further frequency diversity as well as further signal energy of the transmitted signal. When the excess band is not used by the access network node for reception, the excess band may be used by the UE for more aggressive FDSS, which reduces PAPR and allows for a larger maximum transmission power relative to when the UE does not use this excess band.

The use of a signal shaping function without spectrum extension may be considered to be a trade-off between demodulation performance and transmission power gain, while signal shaping with spectrum extension may be considered to be a tradeoff between spectral efficiency and a transmission power gain.

A block diagram of NR uplink transmitter with frequency domain spectral shaping with a spectrum extension chain is illustrated with respect to Figure 4.

Figure 4 illustrates a stream of modulated symbols entering a serial-to-parallel convertor (S/P) 401, which outputs M streams to an M-point DFT entity 402. The spectrum input to the M-point DFT 402 is illustrated at 400A. The M-point DFT entity 402 outputs to a symmetric extension 403, which applies a symmetric extension function to the signal. The signal output by the symmetric extension 403 is illustrated at 400B. The symmetric extension 403 outputs to a Frequency Domain Spectrum Shaping (FDSS) 404. The FDSS 403 shapes the amplitude of the signal, as illustrated at 400C. The FDSS 404 outputs to an N-point inverse fourier fast transform (IFFT) 405. The N-point IFFT 405 outputs to a parallel-to-serial (P/S) convertor 406. The P/S convertor 406 combines the received N signals into a single signal to output. The P/S convertor 406 outputs to an add cyclic prefix entity 407, which outputs a signal for transmission.

In this example of Figure 4, transition band bins (e.g., the edges of the input signal and the signal copied and/or extended to the excess band) are weighted by the Frequency Domain Spectrum Shaping (FDSS) function before mapping to the IFFT input. The FDSS with spectrum extension has an additional spectrum extension block (e.g., a cyclic extension block and/or a symmetric extension block) which results in excess bands. This is illustrated by the waveform illustrated from 400A to 400C, which shows a signal having a width of M subcarriers is extended to a size of Q subcarriers through the operation of the symmetric extension function, where $Q = (1+\alpha)M$, where $\alpha$ is a positive number. From another point of view, the amount of extension can be expressed using an Extension factor $\alpha$: $\alpha = (Q - M)/Q$ (which represents a ratio of the Excess band size to the Total allocation size).

In the example of Figure 4, the spectrum extension is depicted with the following parameters:

- Inband size: Occupied resource elements (REs) or subcarriers after DFT-block 402, i.e., M in Figure 4.
- Excess band size: The amount of REs for spectrum extension, i.e., (Q-M) in Figure 4, which is the amount of REs introduced to the waveform by the symmetric extension block.
- Total allocation size (e.g., Inband size and Excess band size): Occupied REs after "Symmetric extension block", i.e., Q in Figure 4.

It is expected that an access network node (e.g., gNB) parameter and Frequency Domain Resource Allocation (FDRA) signalling to UE will allow both the access network node and the UE to determine inband and excess band allocations in an unambiguous manner.

For Physical Uplink Shared Channel (PUSCH) transmissions, the UE determines the transmission power $P_{\mathrm{PUSCH},b,f,c}(i,j, q_d, l)$ as

$$P_{\mathrm{PUSCH},b,f,c}(i,j,q_d,l) = \min \begin{cases} P_{\mathrm{CMAX},f,c}(i), \\ P_{\mathrm{O\_PUSCH},b,f,c}(j) + 10\log_{10}(2^\mu \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{cases}$$

[dBm]

where $b$ indicates the active uplink bandwidth part (BWP) on carrier $f$ of serving cell $c$, and $j$ is the index for the used parameter set configuration. Further, the indexes $l$ and $l$ respectively identify a PUSCH occasion and PUSCH power control adjustment state. $M_{\mathrm{RB},b,f,c}^{\mathrm{PUSCH}}(i)$ is the bandwidth of the PUSCH resource assignment expressed in number of resource blocks for PUSCH transmission occasion $i$ on an active uplink BWP b of carrier $f$ of serving cell c.

$\alpha_{b,f,c}(i)$ is a factor that is set in dependence on a sounding reference signal and/or j.

$PL_{b,f,c}(q_d)$ is a downlink pathloss estimate in dB calculated by the UE using reference signal (RS) index $q_d$ for the active downlink BWP of carrier $f$ of serving cell $c$.. $\Delta_{\mathrm{TF},b,f,c}(i) = 10log_{10}\left((2^{\mathrm{BPRE}\cdot K_s} - 1) \cdot \beta_{\mathrm{offset}}^{\mathrm{PUSCH}}\right)$ for $K_s$ = 1.25 and $\Delta_{\mathrm{TF},b,f,c}(i) = 0$ for $K_s$ = 0 where $K_s$ is provided by *deltaMCS* for each UL BWP $b$ of each carrier $f$ and serving cell c. If the PUSCH transmission is over more than one layer [6, TS 38.214], $\Delta_{\mathrm{TF},b,f,c}(i)$ = 0. BPRE and $\beta_{\mathrm{offset}}^{\mathrm{PUSCH}}$, for active UL BWP $b$ of each carrier $f$ and each serving cell c, are computed according as discussed in 3GPP TS38.213, Section 7.1.1.

$f_{b,f,c}(i, l)$ is a PUSCH power control adjustment state for an active uplink BWP $b$ of carrier $f$ of serving cell c in PUSCH transmission occasion $i$.

$P_{\mathrm{CMAX},f,c}(i)$ is the UE configured maximum output power for carrier $f$ of serving cell $c$ in PUSCH transmission occasion $i$.

$P_{\mathrm{O\_PUSCH},b,f,c}(j)$ is a parameter composed of the sum of a component $P_{\mathrm{O\_NOMINAL,PUSCH},f,c}(j)$ and a component $P_{\mathrm{O\_UE\_PUSCH},b,f,c}(j)$ where $j \in \{0,1, ...,J - 1\}$.

This transmission power calculation is discussed further in 3GPP TS38.213, Section 7.1.1.

Among the terms in the above power control equation for determining the power to be used for uplink transmission on the PUSCH, there is a modulation and coding (MCS) offset $\Delta_{\mathrm{TF},b,f,c}(i)$ that adjusts the uplink power control to the used MCS.

When a network access node dynamically adjusts MCS to compensate for changes on the channel quality or conditions, this term can be set to 0. However, when the network access node does not use MCS adaptation for dynamic channel condition compensation, the network access node may instead instruct the UE to adjust PUSCH transmission power according to the MCS used by the UE to make uplink transmissions. For example, the UE may be instructed to increase the UE's uplink transmission power for higher MCS values.

The MCS offset is given by $\Delta_{\mathrm{TF},b,f,c}(i) = 10log_{10}((2^{\mathrm{BPRE}\cdot 1.25} - 1))$ for single layer PUSCH containing uplink shared channel (UL-SCH) data. This equation is an approximation based on the Shannon's Capacity Theorem ( $C = B \log_2(1 + SINR)$), from which Signal-to-interference-and-noise-ratio (SINR) is solved with assumption that NR achieves 80% of ideal Shannon capacity.

The Bits Per Resource Element (BPRE) is given by $\mathrm{BPRE} = \sum_{r=0}^{C-1} K_r/N_{RE}$ where $C$ is the number of transmitted code blocks, $K_r$ is the size of code block $r$, and $N_{\mathrm{RE}}$ is a number of resource elements allocated for the PUSCH, excluding the resource elements used for the demodulation reference signal (DMRS) and phase tracking reference signal.

The BPRE is used in determining the MCS offset $\Delta_{\mathrm{TF},b,f,c}(i) = 10log_{10}((2^{\mathrm{BPRE}\cdot 1.25} - 1))$.

In the case of spectrum extension and FDSS, it is not clear how the power control for uplink transmission should be determined. The situation is further complicated by at least two design-related issues.

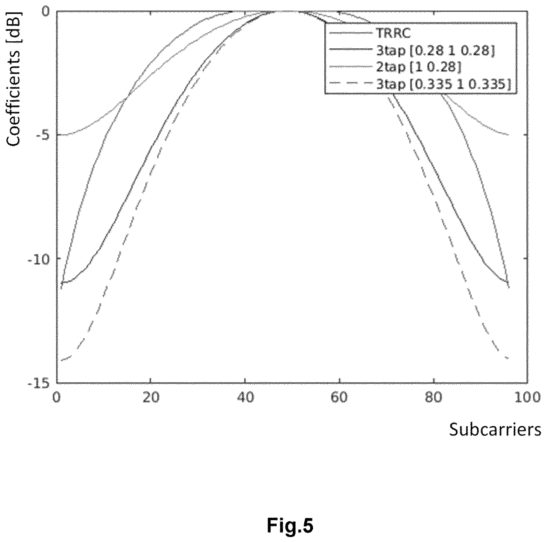

First, it is expected that the exact FDSS filter shape is left for UE implementation (with restrictions on the filter response spectrum flatness and impulse response). There exists several possibilities for the FDSS filter design, which is illustrated in Figure 5.

Figure 5 illustrates four different examples for filter design. The number of subcarriers increases along the x axis. The filter frequency domain coefficients decrease in power (dB) along the y axis.

Second, it is expected that the access network node receiver may have a choice as to whether or not use the excess band/extension band signal or part of it for receiving data. This choice may depend on a variety of factors such as, for example, the applied filter and the signal to noise ratio (SNR). All these design options can add uncertainty how to determine power control.

To address at least one of the above-mentioned issues, the following defines mechanisms for controlling the power control in case of use of FDSS-SE. This may be performed, for example, by rendering the uplink power control dependent on a new FDSS-SE related factor, labelled herein as $\beta_{b,f,c}(i)$. The value of $\beta_{b,f,c}(i)$ may vary in dependence on a design option of the UE and/or the access network node. For example, the value of $\beta_{b,f,c}(i)$ may depend on whether the access network node intends to the use the excess band for data transmission.

In other words, these mechanisms may take into account the receiver operation of the access network node as well as allowing the UE to modify its FDSS filter and enable and/or disable spectral extension mechanisms. The enabling and/or disabling may be based on the modulation and coding scheme being used, and/or on the FDRA location on the channel.

In light of this, the UE may determine the PUSCH transmission power based on following the equation, which includes the new FDSS-SE related term, $\beta_{b,f,c}(i)$:

$$P_{PUSCH,b,f,c}(i,j,q_d,l)$$

$$= min \begin{cases} P_{CMAX,f,c}(i) \\ P_{O\_PUSCH,b,f,c}(j) + 10log_{10}\left(2^{\mu}M_{RB,b,f,c}^{PUSCH}(i)\right) + \alpha_{b,f,c}(j)PL_{b,f,c}(q_d) + \Delta_{TF,b,f,c}(i) + f_{b,f,c}(i,l) + \boldsymbol{\beta_{b,f,c}(i)} \end{cases}$$

The UE may determine $M_{RB,b,f,c}^{PUSCH}(i)$ based on a received uplink allocation and its FDSS-SE mechanism.

For example, when the UE performs SE and uses the excess band, $M_{RB,b,f,c}^{PUSCH}(i)$ corresponds to the total allocated resources, including both inband and excess band allocation. When the UE does not use the excess band (although allocated to the UE), $M_{RB,b,f,c}^{PUSCH}(i)$ may correspond only to the inband allocation.

In an example, the new FDSS-SE related term $\beta_{b,f,c}(i)$ is given by a power offset $P_{\Delta,b,f,c}$ to be configured by the access network node, and is used to compensate the receiver losses when FDSS is used. The access network node (gNB) may determine the offset taking into account whether the access network node utilizes the excess band signal on the detection or not.

The access network node may configure multiple power offset $P_{\Delta,b,f,c}$ values. For example, one of the configured power offset values may represent the case (and be used) when the UE uses the excess band for spectral efficiency (SE). Another configured power offset value may represent (and be used) when the UE does not use the excess band. As another example, different power offsets may be configured for use when the UE uses excess band are configured for use for respective different ranges of number of allocated resource blocks (RBs), or different extension factors, $\alpha$.

When a power offset $P_{\Delta,b,f,c}$ is not configured by the access network node, then the UE may apply $\beta_{b,f,c}(i) = 0$.

In a further example, when the UE uses excess band for SE, the value of the new FDSS-SE related term may be set as $\beta_{b,f,c}(i) = P_{\Delta,b,f,c} - 10log_{10}\left(P_{RE,b,f,c}^{Nominal}/P_{RE,b,f,c}^{Used}\right)$, where $P_{RE,b,f,c}^{Nominal}$ is the sum of squared amplitudes of a nominal shaping filter frequency domain coefficients and $P_{RE,b,f,c}^{Used}$ is the sum of squared amplitudes of FDSS shaping filter frequency domain coefficients used by the UE. The nominal shaping filter frequency domain coefficients may represent a predetermined reference filter.

Shaping filter coefficient may be assumed to have normalized power.

The nominal filter may take any of a plurality of different forms.

For example, the nominal filter may be, for example, a "no shaping filter" with a brick filter shape over the inband allocation. This may be useful as, with more aggressive shaping filter, the access network node receiver losses tend to increase. Correspondingly, the term $10log_{10}\left(P_{RE,b,f,c}^{Nominal}/P_{RE,b,f,c}^{Used}\right)$, may increase the transmission power used for making uplink transmissions.

Alternatively, the nominal filter may cover the total allocation, in which case

$$\beta_{b,f,c}(i) = P_{\Delta,b,f,c} + 10log_{10}\left(P_{RE,b,f,c}^{Nominal}/P_{RE,b,f,c}^{Used}\right)$$.

The nominal filter may also be some other known filter.

The MCS offset term $\Delta_{TF,b,f,c}(i) = 10log_{10}((2^{BPRE \cdot 1.25} - 1))$.

The access network node may indicate to the UE the amount of excess band that UE is to assume to be utilized by the access network node receiver or a numerical scaling factor based on effectiveness of excess band resources on the reception, or based on the detection impact from the FDSS-SE. Correspondingly, the number of resource elements,

$N_{RE}$, in $BPRE = \sum_{r=0}^{C-1} K_r/N_{RE}$ may comprise Physical Uplink Shared Channel (PUSCH) resources that UE assumes to be utilized by the access network node receiver.

In an example, $N_{RE}$ in $BPRE = \sum_{r=0}^{C-1} K_r/N_{RE}$ may comprise the PUSCH resources (e.g., resource elements and/or subcarriers, as discussed further above) according to inband only (e.g., no excess resources). This may be used e.g. in the absence of signalling related to the access network node receiver assumption.

In an example, when the UE performs Spectral Extension and uses the excess band, $N_{RE}$ in $BPRE = \sum_{r=0}^{C-1} K_r/N_{RE}$ corresponds to the total allocated resources, including both inband and excess band allocation. When the UE does not use the excess band (although resources for the excess band may be allocated to the UE), $N_{RE}$ in $BPRE = \sum_{r=0}^{C-1} K_r/N_{RE}$ may correspond only to the inband allocation.

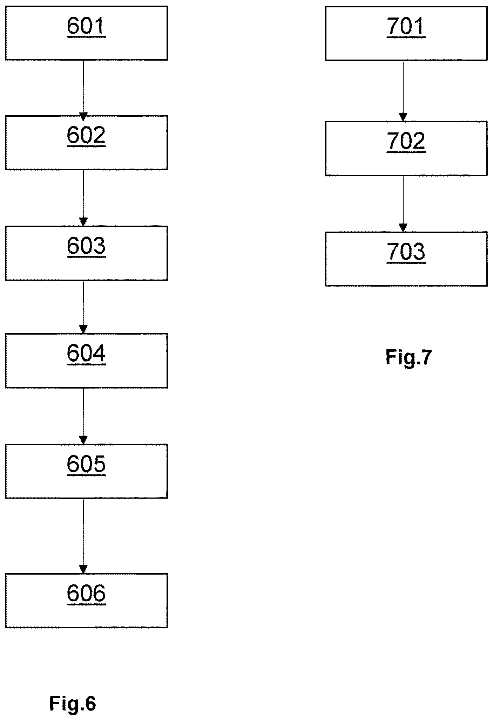

Figure 6 illustrates operations that may be performed by apparatus described herein. This apparatus may be, for example, comprised in a UE.

During 601, the apparatus receives at least one power offset value $P_{\Delta,b,f,c}$. This at least one power offset value may be received using Radio Resource Control (RRC) signalling.

During 602, the apparatus receives an uplink grant for use when making uplink transmissions. These uplink transmissions may comprise transmissions on the PUSCH. These uplink transmissions may be shaped using an FDSS-SE waveform. The uplink grant may comprise at least two of: an inband size, an excess band size, a total allocation size, and an extension factor. The uplink grant may be received in downlink control information, and/or in RRC signalling.

During 603, based on the received uplink grant, the UE's FDSS-SE mechanism, and (if any) a power offset configuration (e.g., the at least one power offset configuration received during 601), the apparatus may calculate a plurality of other parameters based on the apparatus's actual intended use of the extension band. For example, the apparatus may calculate at least one of a power offset value to use ($P_{\Delta,b,f,c}$) and $M_{RB,b,f,c}^{PUSCH}$, wherein the power offset value to be used may be a selected one of the at least one power offset values received during 601 when a plurality of power offset values are received during 601.

During 604, the apparatus calculates $\beta_{b,g,c}(i)$.

$\beta_{b,g,c}(i)$ may be calculated using, for example,

$$\beta_{b,f,c}(i) = P_{\Delta,b,f,c} +/- 10log_{10}\left(P_{RE,b,f,c}^{Nominal}/P_{RE,b,f,c}^{Used}\right)$$

where $P_{RE,b,f,c}^{Nominal}$ is the sum of squared amplitudes of nominal shaping filter frequency domain coefficients (summed over, for example, inband allocation), and $P_{RE,b,f,c}^{Used}$ is the sum of squared amplitudes of FDSS shaping filter frequency domain coefficients over the resources used by the apparatus (inband and any excess band resources). In an example, $P_{RE,b,f,c}^{Used}$ is the sum of squared amplitudes of FDSS shaping filter frequency domain coefficients over only the inband resources. In such an example, only a portion of FDSS shaping filter frequency domain coefficients contribute to

$P_{RE,b,f,c}^{Used}$. Whether the $10log_{10}\left(P_{RE,b,f,c}^{Nominal}/P_{RE,b,f,c}^{Used}\right)$ factor is added or subtracted depends on whether the nominal filter covers only inband allocation (-10log10 is used), or covers the total allocation (e.g., inband and excess allocation) (+10log10 is used).

During 605, the apparatus determines an uplink transmission power for transmitting on the PUSCH with FDSS-SE using the allocated uplink resources.

This may be determined using, for example:

$$P_{PUSCH,b,f,c}(i,j,q_d,l)$$

$$= min\begin{cases} P_{CMAX,f,c}(i) \\ P_{O\_PUSCH,b,f,c}(j) + 10log_{10}\left(2^\mu M_{RB,b,f,c}^{PUSCH}(i)\right) + \alpha_{b,f,c}(j)PL_{b,f,c}(q_d) + \Delta_{TF,b,f,c}(i) + f_{b,f,c}(i,l) + \boldsymbol{\beta_{b,f,c}(i)} \end{cases}$$

During 606, the apparatus transmits on the PUSCH with FDSS-SE using the determined uplink transmission power.

Some of the above mentioned features are reflected below in relation to Figure 7. Figure 7 illustrates operations that may be performed by an apparatus for a user equipment. It is understood that specific implementations of these features of Figure 7 may be realised in the context of the above-provided examples, although the operations of Figure 7 are not limited to this.

During 701, the apparatus receives, from an access network node, a grant of uplink resources for making an uplink transmission within a frequency band for data transmission.

During 702, the apparatus determines whether the apparatus is configured to obtain a signal for the uplink transmission by applying a frequency-domain spectrum shaping with spectrum extension operation to a baseband signal. For example, the apparatus may determine whether the apparatus is configured to apply a cyclic extension operation and/or a symmetric extension operation to the baseband signal.

During 703, the apparatus may select an uplink power to be used for transmitting the uplink transmission in dependence on said whether the apparatus is configured to apply the frequency-domain spectrum shaping with spectrum extension operation. The apparatus may subsequently transmit the uplink transmission using the selected uplink power.

The grant of uplink resources may comprise an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission and/or an extension factor.

Inband reception may correspond to a part of the frequency band of the signal that was not created using the spectrum extension operation. Excess band reception may correspond to a part of the frequency band of the signal that was created using the spectrum extension operation. The access network node may allocate uplink resources by assuming that only the inband part of the frequency spectrum will be used by the user equipment for the uplink transmission. The access network node may allocate uplink resources by assuming that both the inband and excess band part of the frequency spectrum will be used by the user equipment for the uplink transmission. It is understood that in this latter case, the user equipment may utilize the full allocated uplink resources with or without performing the spectrum extension operation. In other words, the assumed use of the allocated resources may be independent of the decision by the user equipment to apply or not apply spectrum extension to an uplink transmission signal.

When the apparatus is configured to apply the frequency-domain spectrum shaping with spectrum extension operation, the apparatus may perform: determining a total bandwidth of the grant of uplink resources; and determining whether to, for the total bandwidth, apply the frequency-domain spectrum shaping with or without spectrum extension operation, wherein the selecting the uplink power further comprises selecting the uplink power in dependence on whether the frequency-domain spectrum shaping operation is applied with or without the spectrum extension.

The determining whether the apparatus is configured to apply a frequency-domain spectrum shaping with spectrum extension operation may comprise: determining a power offset value that comprises a network reception power offset value for compensating for receiver losses for the uplink transmission when the frequency-domain spectrum shaping with spectrum extension operation is applied (e.g., $\alpha$ in the discussion above).

The determining the power offset value may comprise receiving the network reception power offset value from the access network node.

Determining the power offset value may comprise determining a user equipment power offset value for compensating for deviations in a transmission shaping filter used by the user equipment for uplink transmissions relative to a predetermined reference transmission shaping filter (e.g., the nominal filter mentioned above).

The determining the user equipment power offset value may comprise determining:

$$10log_{10}\left(P_{RE,b,f,c}^{Nominal}/P_{RE,b,f,c}^{Used}\right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

**The** determining the power offset value may comprise: identifying a set of power offset values, each power offset value in the set being associated with a respective uplink transmission configuration; and selecting a power offset value from the set of power offset values in dependence on an uplink transmission configuration to be used by the user equipment for the received grant. The set of power offset values may comprise a plurality of different power offset values.

The uplink transmission configuration may comprise at least one of: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and a configured size of resource elements allocated for the uplink resources.

The apparatus may perform: determining a modulation and coding scheme offset value based on an uplink bandwidth part of the uplink transmission, the modulation and coding scheme offset value indicating how the uplink power is to change in dependence on a modulation and coding scheme used for the uplink transmission. In this case, the said selecting the uplink power is performed in dependence on the determined modulation and coding scheme offset value.

The modulation and coding scheme may be proportional to:

$$10log_{10}\left(\left(2^{BPRE\cdot 1.25}-1\right)\right)$$

Wherein the Bits Per Resource Element (BPRE) is given by:

$$BPRE = \sum_{r=0}^{C-1} K_r/N_{RE}$$

The value of $N_{RE}$ (e.g., a number of resource elements) may depend on assumptions made by the network access node when allocating the uplink grant and the actual use of the allocated uplink resources by the user equipment.

For example, as discussed above, there are at least three different options by way of which the MCS power offset term may be calculated. These include:

- According to a first option, a network access node indicates to the UE the amount of excess band that UE should assume to be utilized by the network access node's receiver, and/or a numerical scaling factor based on effectiveness of excess band resources on the reception, or based on the detection impact from the FDSS-SE. Correspondingly, $N_{RE}$ in BPRE = $\sum_{r=0}^{C-1} K_r/N_{RE}$ may correspond to the PUSCH resources that the UE assumes to be utilized by access network node receiver for receiving the uplink transmission made using those resources.

- According to a second option, $N_{RE}$ in $BPRE = \sum_{r=0}^{C-1} K_r/N_{RE}$ may correspond the PUSCH resources according to inband parts of the signal only. This may be used, for example, in the absence of signalling related to access network node receiver assumption.

- According to a third option, if UE performs spectrum extension and uses the excess band for the uplink transmission, $N_{RE}$ in $BPRE = \sum_{r=0}^{C-1} K_r/N_{RE}$ may correspond to the total allocated resources, including both inband and excess band allocation. In the case that UE does not use the excess band (even though the uplink resources for the excess band has been allocated to the UE by the access network node), $N_{RE}$ in $\mathrm{BPRE} = \sum_{r=0}^{C-1} K_r / N_{RE}$ may correspond only to the inband allocation.

In these options, $C$ is a number of transmitted code blocks, $K_r$ is a size for code block $r$, and $N_{RE}$ is a number of resource elements determined as $N_{RE} = N \cdot M_{RB,b,f,c}^{PUSCH}(i) \cdot \sum_{j=0}^{N_{symb,b,f,c}^{PUSCH}(i)-1} N_{sc,data}^{RB}(i,j)$ .

Consequently, the value of $N_{RE}$ may correspond to at least one of: a number of uplink resource elements in the uplink grant that the user equipment assumes to be utilized by an intended receiver of the uplink transmission; a total number of uplink resource elements in the uplink grant; and/or a fraction (i.e., between 0 and 1) of the total number of uplink resource elements in the uplink grant (e.g., to only the inband part of the spectrum).

The presently described mechanisms enables a network access node to adjust its power control in case of FDSS-SE according to its Rx behaviour. It allows also UE to adjust the power control according to its use of spectral extension and FDSS-SE shaping filter, resulting in more accurate power control.

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

For example, although the above examples are provided in the context of inter-DU cell switches, analogous signalling may be performed for inter-CU cell switching.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

**As** provided herein, various aspects are described in the detailed description of examples and in the claims. In general, some examples may be implemented in hardware or special purpose circuits, software code, logic or any combination thereof. For example, some aspects may be implemented in hardware, while other aspects may be implemented in firmware or software code which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software code, firmware code, special purpose circuits or logic, general purpose hardware or controller or other computing devices, or some combination thereof.

The examples may be implemented by computer software code stored in a memory and executable by at least one data processor of the involved entities or by hardware, or by a combination of software code and hardware.

The memory referred to herein may be of any type suitable to the local technical environment and may be implemented using any suitable data storage technology, such as semiconductor based memory devices, magnetic memory devices and systems, optical memory devices and systems, fixed memory and removable memory.

**The** (data) processors referred to herein may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Further in this regard it should be noted that any procedures, e.g., as in Figure 7, and/or otherwise described previously, may represent operations of a computer program being deployed by at least one processor comprised in an apparatus (where a computer program comprises instructions for causing an apparatus to perform at least one action, the instructions being represented as software code stored on at least one memory), or interconnected logic circuits, blocks and functions, or a combination of operations of a computer program being deployed by at least one processor comprised in an apparatus and logic circuits, blocks and functions. The software code may be stored on memory, such as physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" or "means" may refer to one or more or all of the following:

(a) hardware-only circuit implementations (such as implementations in only analogue and/or digital circuitry);
(b) combinations of hardware circuits and software cade, such as:

(i) a combination of analogue and/or digital hardware circuit(s) with software/firmware code and
(ii) any portions of hardware processor(s) with software code (including digital signal processor(s)), software code, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software code (e.g., firmware) for operation, but the software code may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware code. The term circuitry also covers, for example integrated device.

Implementations of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "non-transitory," as used herein, is a limitation of the medium itself (i.e., tangible, not a signal) as opposed to a limitation on data storage persistency (e.g., RAM vs. ROM).

The scope of protection sought for various examples of the disclosure is set out by the independent claims. The examples and features, if any, described in this specification that do not fall under the scope of the independent claims are to be interpreted as examples useful for understanding the disclosure.

The foregoing description has provided by way of non-limiting examples a full and informative description of example implementations of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further implementation comprising a combination of one or more implementations with any of the other implementations previously discussed.

## Claims

1. An apparatus for a user equipment, the apparatus comprising means for performing:

receiving, from an access network node, a grant of uplink resources for making an uplink transmission within a frequency band for data transmission;
determining whether the apparatus is configured to obtain a signal for the uplink transmission by applying a frequency-domain spectrum shaping with spectrum extension operation to a baseband signal; and
selecting an uplink power to be used for transmitting the uplink transmission in dependence on said whether the apparatus is configured to apply the frequency-domain spectrum shaping with spectrum extension operation.

**2.** The apparatus as claimed in claim 1, wherein the grant of uplink resources comprises an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission, and/or an extension factor.

**3.** The apparatus as claimed in any preceding claim, wherein applying the frequency-domain spectrum shaping with spectrum extension operation comprises:

determining a total bandwidth of the grant of uplink resources; and
determining whether to, for the total bandwidth, apply the frequency-domain spectrum shaping with or without spectrum extension operation,
wherein the selecting the uplink power further comprises selecting the uplink power in dependence on whether the frequency-domain spectrum shaping operation is applied with or without the spectrum extension.

**4.** The apparatus as claimed in any preceding claim, wherein applying the frequency-domain spectrum shaping with spectrum extension operation comprises:
determining a power offset value that comprises a network reception power offset value for compensating for receiver losses for the uplink transmission when the frequency-domain spectrum shaping with spectrum extension operation is applied.

**5.** The apparatus as claimed in claim 4, wherein determining the power offset value comprises receiving the network reception power offset value from the access network node.

**6.** The apparatus as claimed in any of claims 4 to 5, wherein determining the power offset value comprises determining a user equipment power offset value for compensating for deviations in a transmission shaping filter used by the user equipment for uplink transmissions relative to a predetermined reference transmission shaping filter.

**7.** The apparatus as claimed in claim 6, wherein determining the user equipment power offset value comprises determining:

$$10log_{10}\left(P_{RE,b,f,c}^{Nominal}\big/P_{RE,b,f,c}^{Used}\right)$$

wherein $P_{RE,b,f,c}^{Nominal}$ represents a sum of squared amplitudes of the predetermined reference transmission shaping filter, and $P_{RE,b,f,c}^{Used}$ represents a sum of squared amplitudes of the transmission shaping filter used by the user equipment for uplink transmissions.

**8.** The apparatus as claimed in any of claims 4 to 7, wherein determining the power offset value comprises:

identifying a set of power offset values, each power offset value in the set being associated with a respective uplink transmission configuration; and
selecting a power offset value from the set of power offset values in dependence on an uplink transmission configuration to be used by the user equipment for the received grant.

**9.** The apparatus as claimed in claim 8, wherein the uplink transmission configuration comprises at least one of the following: a configuration of the user equipment to transmit uplink data on the uplink resources using frequency-domain spectrum shaping with spectrum extension transmissions, a configuration of the user equipment of a degree to which data transmission is to be extended for uplink transmission on the uplink resources; and/or a configured size of resource elements allocated for the uplink resources.

**10.** The apparatus as claimed in any preceding claim, comprising means for:

determining a modulation and coding scheme offset value based on an uplink bandwidth part of the uplink transmission, the modulation and coding scheme offset value indicating how the uplink power is to change in dependence on a modulation and coding scheme used for the uplink transmission, the modulation and coding scheme offset value being dependent on a use and/or allocation of uplink resources for an excess band part and/or inband part of the uplink transmission;
wherein said selecting the uplink power is performed in dependence on the determined modulation and coding scheme offset value.

11. The apparatus as claimed in claim 10, wherein the modulation and coding scheme offset value is proportional to:

$$10 log_{10}\left(\left(2^{\text{BPRE}\cdot 1.25} - 1\right)\right)$$

Wherein the Bits Per Resource Element (BPRE) is given by:

$$\text{BPRE} = \sum_{r=0}^{C-1} K_r / N_{RE}$$

Where C is a number of transmitted code blocks, $K_r$ is a size for code block r, and $N_{RE}$ is a number of resource elements and/or subcarriers.
wherein $N_{RE}$ comprises at least one of the following:

a number of uplink resource elements and/or subcarriers in the uplink grant that the user equipment assumes to be utilized by an intended receiver of the uplink transmission;
a total number of uplink resource elements and/or subcarriers in the uplink grant; and/or
a fraction of the total number of uplink resource elements and/or subcarriers in the uplink grant.

12. A method for an apparatus for a user equipment, the method comprising:

receiving, from an access network node, a grant of uplink resources for making an uplink transmission within a frequency band for data transmission;
determining whether the apparatus is configured to obtain a signal for the uplink transmission by applying a frequency-domain spectrum shaping with spectrum extension operation to a baseband signal; and
selecting an uplink power to be used for transmitting the uplink transmission in dependence on said whether the apparatus is configured to apply the frequency-domain spectrum shaping with spectrum extension operation.

13. The method as claimed in claim 12, wherein the grant of uplink resources comprises an indication of at least two of: a number of resource elements allocated to an inband part of the uplink transmission, a number of resource elements allocated to an excess band part of the uplink transmission, a total number of resource elements allocated to the user equipment for uplink transmission, a number of subcarriers allocated to an inband part of the uplink transmission, a number of subcarriers allocated to an excess band part of the uplink transmission, a total number of subcarriers allocated to the user equipment for uplink transmission, and/or an extension factor.

14. The method as claimed in claim 12 or claim 13, wherein applying the frequency-domain spectrum shaping with spectrum extension operation comprises:

determining a total bandwidth of the grant of uplink resources; and
determining whether to, for the total bandwidth, apply the frequency-domain spectrum shaping with or without spectrum extension operation,
wherein the selecting the uplink power further comprises selecting the uplink power in dependence on whether the frequency-domain spectrum shaping operation is applied with or without the spectrum extension.

15. A computer program comprising instructions which, when executed by an apparatus for a user equipment, causes the apparatus to perform at least the following:

receiving, from an access network node, a grant of uplink resources for making an uplink transmission within a frequency band for data transmission;

determining whether the apparatus is configured to obtain a signal for the uplink transmission by applying a frequency-domain spectrum shaping with spectrum extension operation to a baseband signal; and

selecting an uplink power to be used for transmitting the uplink transmission in dependence on said whether the apparatus is configured to apply the frequency-domain spectrum shaping with spectrum extension operation.

# Fig. 1

**Fig. 2**

**Fig.3**

**Fig.4**

**Fig.5**

```
┌─────────────┐
│     601     │
└─────────────┘
       │
       ▼
┌─────────────┐
│     602     │
└─────────────┘
       │
       ▼
┌─────────────┐
│     603     │
└─────────────┘
       │
       ▼
┌─────────────┐
│     604     │
└─────────────┘
       │
       ▼
┌─────────────┐
│     605     │
└─────────────┘
       │
       ▼
┌─────────────┐
│     606     │
└─────────────┘
```

**Fig.6**

```
┌─────────────┐
│     701     │
└─────────────┘
       │
       ▼
┌─────────────┐
│     702     │
└─────────────┘
       │
       ▼
┌─────────────┐
│     703     │
└─────────────┘
```

**Fig.7**

Europäisches
Patentamt

European
Patent Office

Office européen
des brevets

## EUROPEAN SEARCH REPORT

Application Number

EP 24 16 8168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/011730 A1 (NOKIA TECHNOLOGIES OY [FI]) 9 February 2023 (2023-02-09) * paragraphs [0029] - [0030] * ----- | 1,12,15 | INV. H04W52/14 H04L25/03 |

TECHNICAL FIELDS
SEARCHED (IPC)

H04W
H04L

The present search report has been drawn up for all claims

| Place of search | Date of completion of the search | Examiner |
|---|---|---|
| The Hague | 16 August 2024 | Lustrini, Donato |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 8168

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document cited in search report | | Publication date | Patent family member(s) | | Publication date |
|---|---|---|---|---|---|
| WO 2023011730 | A1 | 09-02-2023 | CN | 117795886 A | 29-03-2024 |
| | | | EP | 4381657 A1 | 12-06-2024 |
| | | | US | 2024267166 A1 | 08-08-2024 |
| | | | WO | 2023011730 A1 | 09-02-2023 |

EPO FORM P0459

For more details about this annex : see Official Journal of the European Patent Office, No. 12/82